# EUROPÄISCHE PATENTSCHRIFT

(11) **EP 3 367 962 B1**
(45) Veröffentlichungstag und Bekanntmachung des Hinweises auf die Patenterteilung: **10.06.2020**
(21) Anmeldenummer: 16729284.6
(22) Anmeldetag: 16.06.2016
(51) Int. Cl.: A61C 17/34, A61C 17/22, A61C 17/20

(54) **ZAHNPUTZVORRICHTUNG**
TEETH CLEANING DEVICE
DISPOSITIF DE BROSSAGE DES DENTS

(30) Priorität: 19.06.2015 DE 102015109891
(43) Veröffentlichungstag der Anmeldung: 05.09.2018
(73) Patentinhaber: BLBR GmbH, 82031 Grünwald (DE)
(72) Erfinder: PITZER, Ernst Martin Wilhelm, 35415 Pohlheim (DE); KEINER, Michael Erich, 35619 Braunfels (DE)
(74) Vertreter: Becker & Kurig Partnerschaft Patentanwälte PartmbB
(86) Internationale Anmeldenummer: PCT/EP2016/063908
(87) Internationale Veröffentlichungsnummer: WO 2016/202928

(56) Entgegenhaltungen:
- WO-A1-2009/137671
- WO-A1-2015/003681
- WO-A1-2015/072676
- DE-U1-202009 008 362
- FR-A1- 2 849 591
- JP-A- 2012 187 377
- US-A1- 2014 272 761
- US-A1- 2014 373 290

## Beschreibung

Die vorliegende Erfindung betrifft eine Zahnputzvorrichtung für das gleichzeitige Reinigen mehrerer Zähne, sowie ein Verfahren zur Herstellung einer derartigen Zahnputzvorrichtu ng.

Das Putzen der Zähne ist die Basis der Individualprophylaxe zur Zahnerhaltung. Primäre Ziele sind die Entfernung bakterieller Plaques wie z.B. Karies oder Parodontitis, und die Entfernung von Speiseresten und Fremdkörpern. Sekundäre Ziele sind die Fluoridapplikation über Zahncremes zur Erhöhung der Widerstandskraft der Zähne, insbesondere des Zahnschmelzes, gegen saure Stoffwechselprodukte der Bakterien im Mundraum.

Verschiedene Arten von Zahnputzvorrichtungen sind derzeit bekannt und finden breite Anwendung:
Das verbreitetste und auch billigste Modell ist die mit der Hand geführte Kurzkopfzahnbürste. Einige Bereiche im Mund sind durch einen kleinen Bürstenkopf besser erreichbar, weshalb hochwertige Handzahnbürsten oft über einen kurzen Kopf, mittelharte bis weiche Kunststoffborsten mit abgerundeten Borstenenden und einen ergonomischen Handgriff verfügen, der eine sichere Führung erlaubt. Ein planes Borstenfeld hat sich bewährt. Zur besseren Reinigung der Zahnzwischenräume und anderer schwer erreichbarer Stellen wurden Modelle mit angewinkelten und kreuzweise angeordneten Borsten sowie gebündelten separaten Borstenfeldern entwickelt.

Die oszillierend-rotierende Rotationszahnbürste zeichnet sich durch einen runden rotierenden bzw. oszillierenden Bürstenkopf aus. Das Funktionsprinzip ist einem Zahnpoliturwerkzeug ähnlich. Die Reinigungsleistung von oszillierend-rotierenden Bürstenköpfen ist nach einer Studie in einem geringen Maße besser als diejenige von Handzahnbürsten.

Als Weiterentwicklung der elektrischen Zahnbürste gilt die elektronische Schallzahnbürste. Bei dieser wird der Bürstenkopf mit einer höheren Frequenz als bei herkömmlichen elektrischen Zahnbürsten bewegt. Anstelle eines gewöhnlichen Elektromotors wird der Kopf über einen elektrischen Schallwandler (magnetisch oder über Piezo-Effekt) angetrieben und lässt den Bürstenkopf meist mit einer Frequenz von 250 bis 300 Hz schwingen. Der Zahn wird nicht durch die Schallwellen als solches gereinigt, sondern nur durch die sich mit relativ hoher Frequenz bewegenden Borsten. Eine Besonderheit bei Schallzahnbürsten ist die ovale Form ihres Bürstenkopfes, welche an den Kopf einer herkömmlichen Handzahnbürste erinnert.

Bei Schwingungsfrequenzen oberhalb 300 Hz spricht man analog von "Ultraschallzahnbürsten". Ultraschallzahnbürsten erreichen bis zu 1,8 Mio. Schwingungen pro Sekunde (1,8 MHz). Derartige Geräte arbeiten mit einem Tupfer, der die Flüssigkeit im Mund in Schwingungen versetzt und mit Hilfe einer speziellen Zahnpasta erzeugte Schaumblasen zum Platzen bringt. Durch dieses Zerplatzen wird die Reinigungsleistung erreicht. Ultraschallzahnpasta enthält keinen Putzkörper. Echte Ultraschallzahnbürsten arbeiten nicht mehr mechanisch; sie erkennt man daran, dass sie nicht mit herkömmlicher Zahnpasta funktionieren, denn der Putzkörper verhindert die Wirkungsweise. Zwar arbeiten Ultraschallzahnbürsten nach wie vor mit einer Bürste als Aufsatz, als Tupfer könnte jedoch auch z. B. ein Schwamm eingesetzt werden. Der Vorteil der Ultraschallzahnbürste besteht neben der gründlichen Reinigung vor allem darin, dass Zähne und Zahnfleisch nicht mechanisch bearbeitet werden: Eine längere Verweildauer auf einem Zahn schadet somit nicht, und die Ultraschallzahnbürste lässt sich auch verwenden, wenn ein Implantat frisch eingesetzt worden ist. Bei Ultraschallzahnbürsten wird die Ultraschallzahnpasta zunächst in ausgeschaltetem Zustand auf den Innen- und Außenflächen der Zähne verteilt, dann wird die Zahnbürste eingeschaltet, und der Bürstenkopf wird jeweils fünf bis zehn Sekunden an die jeweilige Innen- bzw. Außenfläche gehalten.

Allen Verfahren gleich ist, dass die eigentliche Reinigung des Gebisses von Zahn zu Zahn nacheinander manuell durch den Anwender erfolgen muss. Unabhängig davon, welche Form der Zahnreinigung gewählt wird, muss der Benutzer einen nur wenige Millimeter großen Bürstenkopf in verschiedenen Techniken nacheinander über die Zahnoberflächen führen. Dabei kommen verschiedenste Hinweise zum Einsatz, wie die sinnvolle Ausführung der Putzbewegung (kreisend, streichend) zu gestalten ist. Um ein normales menschliches Gebiss Zahn für Zahn nacheinander sorgfältig zu reinigen, werden somit insgesamt ca. 2,5 bis 3 Minuten ausschließlich für die Reinigungstätigkeit benötigt.

Die US 5,365,624 beschreibt eine Zahnputzvorrichtung für das gleichzeitige Reinigen aller Zähne, die als wesentliches Merkmal verschiebbare und/oder rotierende Bürsten besitzt, welche mit einem Wasserantrieb in Bewegung gesetzt werden. Gleichzeitig soll das austretende Wasser über ein Unterdrucksystem wieder abgeführt und dabei Speisereste und andere Substanzen ausgeschieden werden.

Weitere herkömmliche Gebissreinigungsvorrichtungen sind in WO 2015/072676 A1, WO 2009/137671 A1, JP 2012 187377 A1, DE 20 2009 008362 U1, US 2014/272761 A1, US 2014/373290 A1, FR 2 849 591 A1 und WO 2015/003681 A1 beschrieben.

Mit einer derartigen Zahnputzvorrichtung lässt sich die benötigte Zeitdauer für die Reinigung des Gebisses erheblich verringern, da im Wesentlichen alle Zähne gleichzeitig geputzt werden. Allerdings bestehen für die bei dieser Zahnputzvorrichtung vorgesehene Spülung mit Wasser über eine Zufuhr- und Abführungsleitung grundsätzlich ähnliche Bedenken wie bei Mundduschen. Es herrscht dort weitgehender wissenschaftlicher Konsens darüber, dass der Wasserstrahl einer Munddusche bei vorhandenen, auch klinisch nicht sichtbaren Entzündungen, die Bakterien tiefer in die Taschen am Zahnfleischrand einspülen kann und dadurch Entzündungen verschlimmert.

Es ist daher Aufgabe der vorliegenden Erfindung, eine Zahnputzvorrichtung für das gleichzeitige Reinigen aller Zähne vorzuschlagen, die ein Eindrücken von Bakterien in Taschen am Zahnfleischrand weitgehend vermeidet und insbesondere keinen Wasserantrieb erfordert.

Diese Aufgabe wird erfindungsgemäß gelöst durch eine Zahnputzvorrichtung gemäß den beigefügten Ansprüchen. Gemäß der Erfindung umfasst eine Zahnputzvorrichtung für die gleichzeitige Reinigung aller Zähne eines Benutzers:
a) einen Mundeinsatz zum Einsetzen in den Mund des Benutzers;
b) eine Mehrzahl von Reinigungsstrukturen, die an dem Mundeinsatz angebracht oder einstöckig mit dem Mundeinsatz ausgebildet sind;
c) ein an dem Mundeinsatz angebrachtes Kupplungselement; und
d) eine Antriebsvorrichtung mit:
   - einem Vibrationsmotor, der derart mit dem Kupplungselement verbindbar ist, dass er den Mundeinsatz im Betrieb der Zahnputzvorrichtung in Vibration versetzt, und
   - einem Reinigungsprogramm-Auswahlelement zum Auswählen eines Reinigungsprogramms, das eine Vibrationsfrequenz des Vibrationsmotors innerhalb eines vorgegebenen Frequenzbereichs und/oder eine Vibrationsamplitude des Vibrationsmotors innerhalb eines vorgegebenen Amplitudenbereichs definiert.
      Der Mundeinsatz ist zweiteilig ausgebildet, mit einem oberen Mundeinsatzelement für die Zähne des Oberkiefers und einem unteren Mundeinsatzelement für die Zähne des Unterkiefers, wobei an dem oberen und dem unteren Mundeinsatzelement jeweils ein Kupplungselement zur Verbindung mit einem jeweiligen zugeordneten Vibrationsmotor angebracht ist.
      Das Reinigungsprogramm-Auswahlelement ist dazu ausgelegt aus einem Speicher einer Steuerschaltung der Antriebsvorrichtung ein erstes vordefiniertes Reinigungsprogramm für das obere Mundeinsatzelement und ein zweites vordefiniertes Reinigungsprogramm für das untere Mundeinsatzelement auszuwählen.

Die erfindungsgemäße Zahnputzvorrichtung verwendet somit einen Vibrationsmotor der aus Komfortgründen zweckmäßigerweise batterie- oder akkubetrieben ist, um den gesamten Mundeinsatz und somit auch die am Mundeinsatz vorgesehenen Reinigungsstrukturen, die im Betrieb der Zahnputzvorrichtung an den Zähnen des Benutzers anliegen, in Schwingung zu versetzen. Verunreinigungen auf den Zahnflächen,, d.h. den Seitenflächen der Zähne, und den Kauflächen werden durch den Kontakt mit den vibrierenden Reinigungsstrukturen entfernt. Ein Wasserantrieb ist hierfür nicht erforderlich, so dass die im Stand der Technik auftretenden Probleme bereits im Grundsatz vermieden werden. Zudem kann mithilfe des Reinigungsprogramm-Auswahlelements eine niedrige Vibrationsfrequenz aus dem vorgegebenen Frequenzbereich und/oder eine niedrige Vibrationsamplitude aus dem vorgegebenen Amplitudenbereich ausgewählt werden, so dass auch ein etwaiges mechanisches Eindrücken von Bakterien in die Taschen am Zahnfleischrand durch ein besonders sanftes Putzen verhindert oder zumindest reduziert werden kann. Mit der erfindungsgemäßen Zahnputzvorrichtung können alle Zähne des Benutzers effektiv gleichzeitig gereinigt werden, so dass sich das Zähneputzen zeitlich auf ca. 10-30 Sekunden verkürzt.

Zweckmäßigerweise ist hierbei vorgesehen, dass der vorgegebene Frequenzbereich zwischen ungefähr 1500 und ungefähr 41.000 Schwingungen pro Minute liegt Der Benutzer kann dann eine Vibrationsfrequenz am unteren Ende dieses Frequenzbereichs wählen, um eine besonders sanfte Zahnreinigung durchzuführen und ein Eindrücken von Bakterien in die Taschen am Zahnfleischrand zu vermeiden, oder eine Vibrationsfrequenz am oberen Ende dieses Frequenzbereichs für eine besonders gründliche Zahnreinigung.

Vorzugsweise ist zu diesem Zweck vorgesehen, dass das Reinigungsprogramm-Auswahlelement ein Frequenzeinstellelement und/oder ein Amplitudeneinstellelement umfasst, das/die an einem Gehäuse der Antriebsvorrichtung für den Benutzer zugänglich angeordnet ist/sind. Diese Einstellelemente können bspw. Drehschalter oder digitale Tasten umfassen, die dem Benutzer eine schnelle und zuverlässige Frequenz- und/oder Amplitudeneinstellung ermöglichen. Grundsätzlich ist auch eine Ausgestaltung möglich, bei der ein einziges Einstellelement die Funktion eines kombinierten Frequenz- und Amplitudeneinstellelements übernimmt und dem Benutzer eine gegebenenfalls stufenlose Verstellung von sanftem Putzen mit niedriger Frequenz und Amplitude zu intensivem Putzen mit hoher Frequenz und Amplitude ermöglicht.

In einer bevorzugten Weiterbildung der erfindungsgemäßen Zahnputzvorrichtung ist das Reinigungsprogramm-Auswahlelement dazu ausgelegt, aus einem Speicher einer Steuerschaltung der Antriebsvorrichtung wenigstens ein vordefiniertes Reinigungsprogramm auszuwählen, das eine zeitliche Veränderung der Vibrationsfrequenz und/oder der Vibrationsamplitude des Vibrationsmotors vorsieht. Auf diese Weise können bspw. zu Beginn einer Zahnreinigung andere Vibrationsfrequenzen bzw. -amplituden als am Ende der Zahnreinigung gewählt werden.

Zweckmäßigerweise sieht das wenigstens eine vordefinierte Reinigungsprogramm einen zeitlichen Anstieg der Vibrationsfrequenz und/oder der Vibrationsamplitude vor. Dann kann die Zahnreinigung sanft mit niedrigerer Vibrationsfrequenz und/oder Vibrationsamplitude begonnen werden, und sobald zum Beispiel gröbere Verunreinigungen entfernt sind, kann die Vibrationsfrequenz bzw. -amplitude zur Verstärkung der Putzwirkung erhöht werden.

Dabei sieht das wenigstens eine vordefinierte Reinigungsprogramm zweckmäßigerweise nach dem zeitlichen Anstieg die Beibehaltung einer maximalen Vibrationsfrequenz und/oder Vibrationsamplitude während eines vorbestimmten Zeitraums vor, gefolgt von einer anschließenden Verringerung der Vibrationsfrequenz und/oder der Vibrationsamplitude, und/oder einem automatischen Abschalten des Vibrationsmotors.

Die Reinigungsstrukturen, die durch ihren vibrierenden Kontakt mit den Zahnflächen und Kauflächen die Zähne des Benutzers reinigen, können aus einer Vielzahl von Materialien gebildet und in unterschiedlichen Formen ausgestaltet sein. Insbesondere ist bei der erfindungsgemäßen Zahnputzvorrichtung vorgesehen, dass die Reinigungsstrukturen umfassen:
a) Gummierungsschichten, die auf Oberflächenbereichen des Mundeinsatzes angebracht sind; und/oder
b) Reinigungselemente, die einstückig mit Oberflächenbereichen des Mundeinsatzes ausgebildet sind; und/oder
c) Streifenbürsten, die auf Oberflächenbereichen des Mundeinsatzes angebracht sind.

In einer einfach herzustellenden und kostengünstigen Ausführungsform der erfindungsgemäßen Zahnputzvorrichtung kann ein einziger Typ von Reinigungsstrukturen an dem gesamten Mundeinsatz vorgesehen sein.

In einer verbesserten Ausführungsform hingegen können Reinigungsstrukturen im Bereich von Kauflächen verschieden sein von Reinigungsstrukturen im Bereich von Zahnflächen, und/oder Reinigungsstrukturen im Bereich von Zahnflächen können verschieden sein von Reinigungsstrukturen im Bereich des Zahnfleischrands. Denn die Kauflächen der Zähne besitzen üblicherweise einen besonders harten Zahnschmelz. Gleichzeitig kommen sie auch intensiver mit Nahrung und übertragenen Bakterien in Berührung. Durch den hohen Anpressdruck bei den Kaubewegungen werden Verunreinigungen tiefer in die Mikrofissuren der Kauflächen eingepresst. Daher benötigen und vertragen die Kauflächen eine intensivere, festere Putztätigkeit als die Zahnflächen. Folglich können in der genannten verbesserten Ausführungsform der erfindungsgemäßen Zahnputzvorrichtung bspw. im Bereich der Kauflächen relativ harte Reinigungselemente vorgesehen sein, die einstückig mit der Oberfläche des Mundeinsatzes ausgebildet sind, wohingegen im Bereich der Zahnflächen weichere Streifenbürsten platziert sind. Ebenso können im Bereich der Kauflächen bspw. relativ harte rautenförmige Reinigungselemente und im Bereich der Zahnflächen weichere zylinderförmige Reinigungselemente jeweils einstückig mit der Oberfläche des Mundeinsatzes ausgebildet sein.

Eine weitere Unterscheidung kann zwischen Zahnflächen und Zahnfleischrand getroffen werden, der bekanntlich besonders empfindlich ist. Bspw. können im Bereich der Zahnflächen Reinigungselemente vorgesehen sein, die einstückig mit Oberflächenbereichen des Mundeinsatzes ausgebildet sind, wohingegen der Mundeinsatz am Zahnfleischrand Gummierungsschichten trägt.

Die Befestigung derartiger Gummierungsschichten bzw. Streifen bürsten am Mundeinsatz kann mittels Kontaktkleber erfolgen, z.B. Cyanacrylat.

In einer einfachen Variante ist der Mundeinsatz der erfindungsgemäßen Zahnputzvorrichtung einteilig ausgebildet, d.h. er trägt die Reinigungsstrukturen für alle Zähne des Benutzers.

Diese Ausgestaltung der Erfindung lässt sich einfacher herstellen und ist außerdem dann vorteilhaft, wenn das Reinigungsprogramm-Auswahlelement dazu ausgelegt ist, aus einem Speicher einer Steuerschaltung der Antriebsvorrichtung ein erstes vordefiniertes Reinigungsprogramm für das obere Mundeinsatzelement und ein zweites vordefiniertes Reinigungsprogramm für das untere Mundeinsatzelement auszuwählen.

Dies bietet dem Benutzer der erfindungsgemäßen Zahnputzvorrichtung, gegebenenfalls in Rücksprache mit seinem Zahnarzt, erhöhte Flexibilität bei der Reinigung seines Gebisses, da es z.B. möglich wird, kräftigere Zähne des Oberkiefers mit höherer Vibrationsfrequenz und/oder Vibrationsamplitude und somit fester zu putzen als etwaige sensiblere Zähne des Unterkiefers oder umgekehrt.

Die Erfindung betrifft ferner ein Verfahren zur Herstellung einer Zahnputzvorrichtung wie oben beschrieben, umfassend die Schritte:
a) Scannen des Gebisses des Benutzers mit einem Intraoralscanner;
b) Generieren eines 3D-Gebissmodells aus den Scandaten;
c) Erstellen einer Konstruktionsdatei für den Mundeinsatz auf Grundlage des 3D-Gebissmodells; und
d) Herstellung des Mundeinsatzes mittels eines 3D-Druckverfahrens.

Vorzugsweise umfasst hierbei der Schritt d) selektives Lasersintern und/oder Gummisintern.

Mit einem handelsüblichen Intraoralscanner wird hierbei die Gebisssituation des Benutzers digital erfasst und aus den resultierenden Daten ein 3D-Modell generiert. Derartige Scanner arbeiten üblicherweise mit einer Genauigkeit von 5/100 mm, was für die Erfindung auseichend ist. Abgebildet werden sowohl das Hart- als auch das Weichgewebe. Der digitale Abdruck dient als Basis für die computergestützte Konstruktion und Fertigung des Mundeinsatzes. Die Ausgabe erfolgt z.B. in einer offenen STL-Datei.

Die Transformation der STL-Datei in eine Konstruktionsdatei zur Herstellung des Mundeinsatzes erfolgt im offenen digitalen Workflow. Als Arbeitsbasis dient eine CAD-Software in Verbindung mit einer Manipulationssoftware für 3D-Netze. Obwohl die menschlichen Gebisse und Kiefer in Form, Ausprägung und Größe einer hohen Varianz unterliegen, folgt die geometrische Konstruktion des Mundeinsatzes einem linearen Algorithmus, so dass nach einmaliger Festlegung der Parameter die Dateierstellung automatisiert in wenigen Minuten erfolgt. Dabei können durch einfache Bedieneinstellungen Parameter wie Wandstärke, Außenbegrenzungen und Abstände verändert werden.

Die Herstellung des Mundeinsatzes erfolgt vorzugsweise im 3D-Druckverfahren über selektives Lasersintern. Das Verfahren eignet sich sehr gut, um preisgünstig große Stückzahlen herzustellen. Mit einem 3D-Drucker (Industriestandard) können bis zu 1.000 Reinigungsprothesen innerhalb von 24 Stunden hergestellt werden.

Der Mundeinsatz besteht vorzugsweise aus biokompatiblem Polyamid. Biokompatibles Polyamid hat ein breites Anwendungsspektrum in der Medizin und wird beispielsweise für Stents, Katheter, Implantate etc. verwendet. Alternativ können thermoplastische Elastomere mittels Gummi-Sintern verarbeitet werden. Thermoplastische Elastomere sind Kunststoffe, die sich bei Raumtemperatur vergleichbar den klassischen Elastomeren verhalten, sich jedoch unter Wärmezufuhr plastisch verformen lassen und somit ein thermoplastisches Verhalten zeigen. Das Material wird unter Hitzezufuhr bearbeitet (Laser-Sinter-Verfahren) und ist auch nach der Bearbeitung hitzeempfindlicher als andere Materialien. In seiner Flexibilität steht es gewöhnlichem Gummi nur in der Flexibilität etwas nach und gleicht diesem auch sonst stark. Das Material ist vergleichsweise leicht.

Um eine optimale Übertragung der kinetischen Energie des Vibrationsmotors auf den Mundeinsatz und damit eine effektive Reinigung der Zähne zu erzielen, ist es erfindungsgemäß vorgesehen, die unmittelbaren Reinigungsflächen des Mundeinsatzes mit Reinigungsstrukturen zu versehen. In Abhängigkeit von der Gebissstruktur und Empfindlichkeit des Anwenders gibt es hierbei vor allem die nachfolgenden Optionen, die gegebenenfalls miteinander kombiniert werden können:

### a) Beschichtung mittels Gummierung

Beim Gummieren wird eine elastische Schicht, die aus Kautschuk (Natur oder synthetisch) besteht, auf dem Trägermaterial aufgebracht und mit Schwefel-Zusatz vulkanisiert. Dazu erfolgt zuerst das Auftragen des Bindemittels durch Aufstreichen, Aufspritzen, Tauchen, Aufspachteln oder Belegen mit Gummiplatten auf die gereinigte und aufgeraute Bauteiloberfläche. Nach Trocknen dieser Gummischicht wird in heißer Luft oder mit Sattdampf bei ca. 130° C vulkanisiert.

### b) Gestaltung einer Oberflächenstruktur durch CAD

Mit einem üblichen CAD-Programm können die Reinigungsflächen profiliert werden, um hierdurch die genannten Reinigungselemente zu erzeugen. Die Kauflächen können bspw. mit Rauten besetzt sein. Der Durchmesser einer Raute beträgt vorzugsweise 0,2 bis 0,3 mm. Der Abstand zwischen den Seitenlinien von 2 Rauten beträgt vorzugsweise 0,2 bis 0,3 mm. Die Abstände haben vorzugsweise eine Tiefe von vorzugsweise 0,5 bis 1 mm.

Die Zahnflächen können mit Reinigungselementen in Form von Zylindern besetzt sein. Der Durchmesser eines Zylinders beträgt vorzugsweise 0,2 mm. Der Abstand zwischen den Mittelachsen von 2 Zylindern beträgt vorzugsweise 0,2 bis 0,4 mm. Die Abstände haben vorzugsweise eine Tiefe von vorzugsweise 0,5 bis 1 mm.

### c) Anbringen von Streifenbürsten

Streifenbürsten haben einen kontinuierlichen Besatz und können exakt auf die Länge und Breite der Reinigungsfläche zugeschnitten werden. Als Bürstenmaterial eignen sich Nylon oder Fiber. Sie werden bspw. in einer gefrästen Nut verankert oder auf die Oberfläche des Mundeinsatzes geklebt.

Bevorzugte Ausführungsformen der Erfindung werden nachfolgend anhand von nichtbeschränkenden Beispielen unter Bezugnahme auf die beigefügten Figuren erläutert werden. Es zeigen:
- Fig. 1: eine perspektivische Ansicht eines einteiligen Mundeinsatzes in einer ersten Ausführungsform der erfindungsgemäßen Zahnputzvorrichtung;
- Fig. 2: eine perspektivische Ansicht einer Antriebsvorrichtung zum Anschließen an den Mundeinsatz aus Fig. 1;
- Fig. 3: eine perspektivische Ansicht eines in der Antriebsvorrichtung aus Fig. 2 enthaltenen Vibrationsmotors;
- Fig. 4: eine Detailansicht von Reinigungselementen an der Oberfläche des Mundeinsatzes aus Fig. 1;
- Fig. 5: eine perspektivische Ansicht eines 2-teiligen Mundeinsatzes in einer zweiten Ausführungsform der erfindungsgemäßen Zahnputzvorrichtung, wobei Fig. 5A ein oberes Mundeinsatzelement für die Zähne des Oberkiefers und Fig. 5B ein unteres Mundeinsatzelement für die Zähne des Unterkiefers darstellt;
- Fig. 6: eine schematische Querschnittsansicht einer Antriebsvorrichtung zum Anschließen an den Mundeinsatz aus Fig. 5.

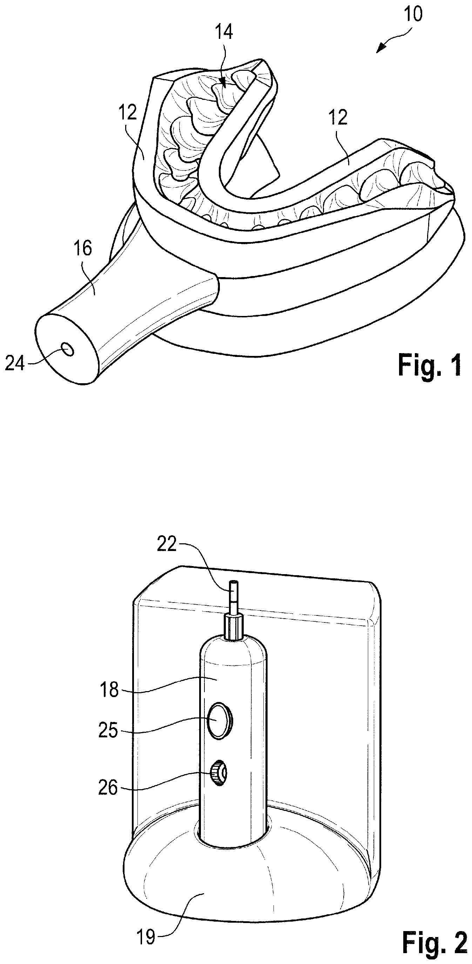

Die Figuren 1-4 zeigen eine erste Ausführungsform der erfindungsgemäßen Zahnputzvorrichtung. Figur 1 zeigt hierbei eine perspektivische Ansicht eines einteiligen Mundeinsatzes 10, der mittels des erfindungsgemäßen Verfahrens auf Grundlage eines 3D-Gebissmodells des Benutzers angefertigt ist.

Die Wandstärke der Wände 12 des Mundeinsatzes 10 beträgt typischerweise 1 bis 2,5 mm. Die äußere Begrenzung der Wände 12 verläuft in der Regel 1 bis 3 mm oberhalb des Zahnfleischrandes. Der Abstand zwischen den Reinigungsflächen, d.h. denjenigen Flächen des Mundeinsatzes 10, auf denen Reinigungsstrukturen 14 vorgesehen sind, und den Zahnoberflächen beträgt 0 bis 5 mm in Abhängigkeit von den gewählten Reinigungsstrukturen 14.

An dem Mundeinsatz 10 ist ein Kupplungselement 16 zur Verbindung des Mundeinsatzes 10 mit einer Antriebsvorrichtung 18 angebracht, die in Figur 2 schematisch in einer Halterung 19 stehend dargestellt ist. Sie ist grundsätzlich mit Antriebsvorrichtungen vergleichbar, wie sie aus dem Stand der Technik auf dem Gebiet der Schallzahnbürsten bekannt sind.

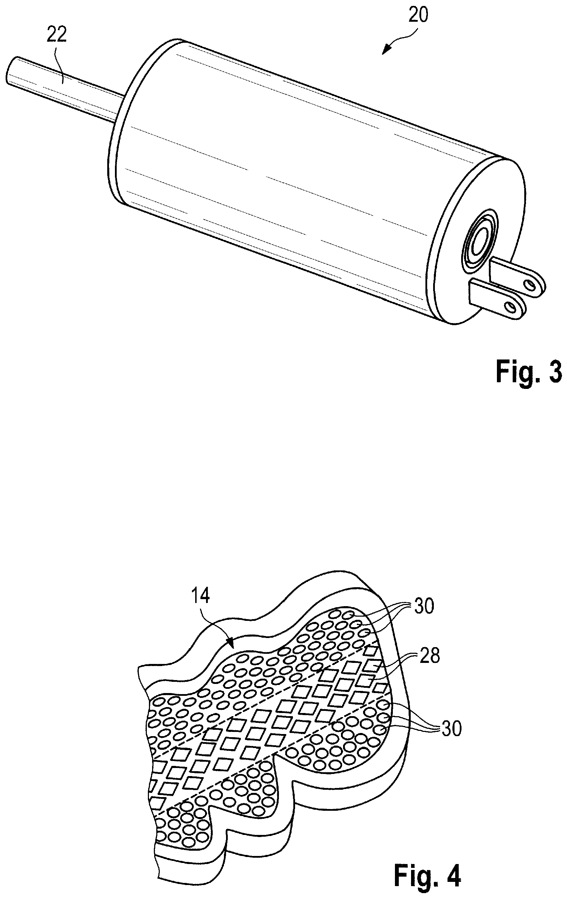

In einem Gehäuse der Antriebsvorrichtung 18 ist ein in Fig. 3 gezeigter Vibrationsmotor 20 aufgenommen, der im Betrieb der erfindungsgemäßen Zahnputzvorrichtung einen aus dem Gehäuse vorstehenden Schwingschaft 22 in Vibration versetzt. Zum Zähneputzen steckt der Benutzer den Schwingschaft 22 in eine passende Bohrung 24 an der Vorderseite des Kupplungselements 16 ein und nimmt den Mundeinsatz 10 in den Mund. Sobald die Antriebsvorrichtung 18 mittels eines Ein-/Aus-Schalters 25 eingeschaltet wird, beginnt der Schwingschaft 22 zu vibrieren. Über das Kupplungselement 16 werden diese Vibrationen auf den Mundeinsatz 10 übertragen, dessen Reinigungsstrukturen 14 dann im Mund des Benutzers an seinen Zahn- und Kauflächen vibrieren und sie somit reinigen.

Die Vibrationsfrequenz kann vom Benutzer mit Hilfe eines Reinigungsprogramm-Auswahlelement eingestellt werden, das in dem in Figur 2 gezeigten Fall als einfaches Frequenzeinstellelement einen Drehschalter 26 umfasst, der außen am Gehäuse der Antriebsvorrichtung 18 für den Benutzer zugänglich angeordnet ist. Alternativ kann der Drehschalter 26 anstelle einer direkten Auswahl der Vibrationsfrequenz auch eine Auswahl zwischen verschiedenen Reinigungsprogrammen aus einem Speicher einer Steuerschaltung der Antriebsvorrichtung 18 erlauben, die sich bspw. in der Zahnputzdauer, der absoluten Vibrationsfrequenz, dem zeitlichen Verlauf der Vibrationsfrequenz mit unterschiedlich steilem Anstieg oder Abfall und anderen Zahnputzparametern unterscheiden. Ferner kann ein weiterer Drehschalter oder digitale Tasten außen am Gehäuse der Antriebsvorrichtung 18 zur direkten Auswahl der Vibrationsamplitude angeordnet sein.

Fig. 4 zeigt eine Detailansicht von Reinigungsstrukturen 14 in Form von Reinigungselementen, die an der Oberfläche des Mundeinsatzes 10 aus Fig. 1 vorgesehen sein können. In diesem Fall handelt es sich jeweils um Reinigungselemente, die einstückig mit dem Mundeinsatz 10 an dessen Oberfläche gebildet sind. Im Bereich der Kauflächen sind in dieser Ausführungsform rautenförmige Reinigungselemente 28 vorgesehen, im Bereich der vorderen und hinteren Zahnflächen jeweils zylinderförmige Reinigungselemente 30. Aufgrund der Rautenform sind die Reinigungselemente 28 härter als die zylinderförmigen Reinigungselemente 30, so dass im Bereich der Kauflächen eine intensivere Zahnputzwirkung erzielt wird. Selbstverständlich können die Reinigungselemente 30 an den vorderen und hinteren Zahnflächen verschieden ausgebildet sein. Ebenso könnten in jedem der in Figur 4 gezeigten Bereiche, d.h. im Bereich der hinteren Zahnflächen, der Kauflächen und der vorderen Zahnflächen, auch andere Reinigungsstrukturen 14 vorgesehen sein, bspw. Gummierungsschichten und/oder Streifenbürsten.

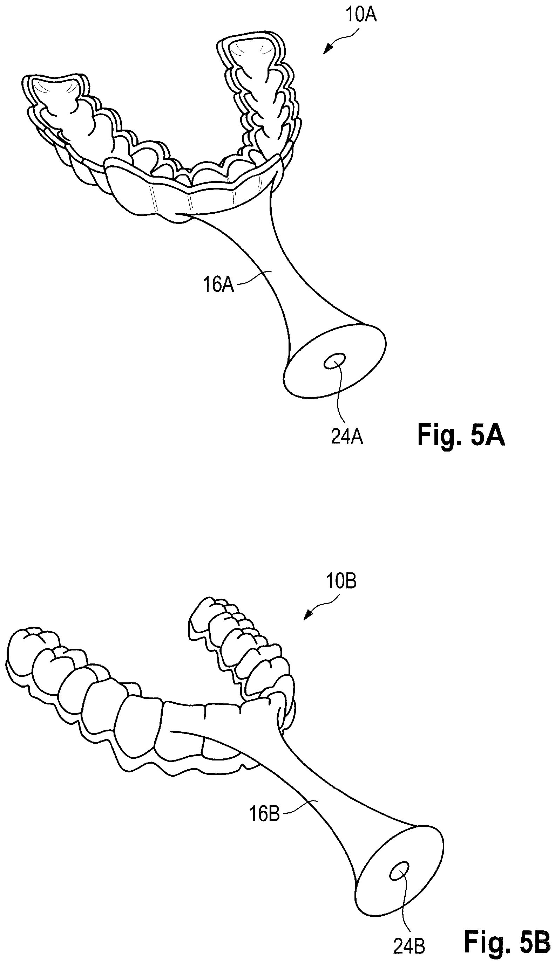

Die Figuren 5A und 5B zeigen eine perspektivische Ansicht eines 2-teiligen Mundeinsatzes in einer zweiten Ausführungsform der erfindungsgemäßen Zahnputzvorrichtung, wobei Fig. 5A ein oberes Mundeinsatzelement 10A für die Zähne des Oberkiefers und Fig. 5B ein unteres Mundeinsatzelement 10B für die Zähne des Unterkiefers darstellt.

Am oberen Mundeinsatzelement 10A ist ein oberes Kupplungselement 16A mit einer Bohrung 24A angebracht, am unteren Mundeinsatzelement 10B ein unteres Kupplungselement 16B mit einer Bohrung 24B.

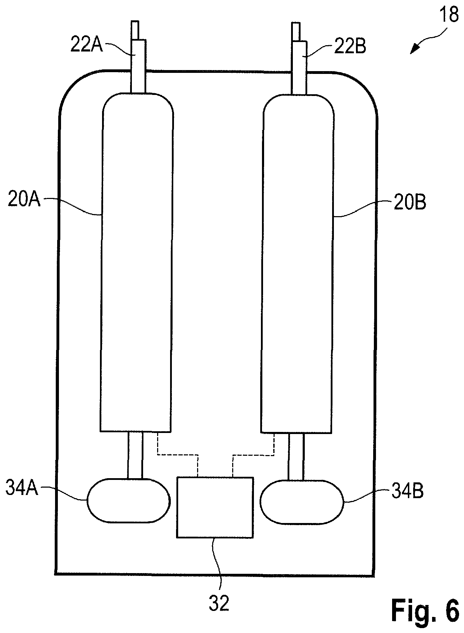

Fig. 6 zeigt in einem schematischen Querschnitt eine passende Antriebsvorrichtung 18 zur Verwendung mit den Mundeinsatzelementen 10A, 10B in dieser zweiten Ausführungsform. Diese Antriebsvorrichtung 18 umfasst zwei separate Vibrationsmotoren 20A, 20B, deren Schwingschäfte 22A, 22B jeweils einzeln mit den Kupplungselementen 16A bzw. 16B des oberen Mundeinsatzelements 10A bzw. des unteren Mundeinsatzelements 10B zu verbinden sind, indem man sie in die Bohrungen 24A bzw. 24B einsteckt..

Das in der Querschnittsansicht der Figur 6 nicht erkennbare Reinigungsprogramm-Auswahlelement ist dazu ausgelegt, aus einem Speicher einer internen Steuerschaltung 32 der Antriebsvorrichtung 18 ein erstes vordefiniertes Reinigungsprogramm für das obere Mundeinsatzelement 10A und ein zweites vordefiniertes Reinigungsprogramm für das untere Mundeinsatzelement 10B auszuwählen. Dies erlaubt es bei entsprechender medizinischer Notwendigkeit, den Zähnen des Oberkiefers des Benutzers eine andere Zahnputzbehandlung zukommen zu lassen als den Zähnen des Unterkiefers, wobei sich die verschiedenen Zahnputzbehandlungen insbesondere in ihrer Vibrationsfrequenz und -Amplitude unterscheiden.

In einer einfacheren Variante kann in dem Speicher der Steuerschaltung 32 auch ein und dasselbe vordefinierte Reinigungsprogramm für beide Mundeinsatzelemente 10A,B hinterlegt sein. In diesem Fall werden die Zähne des Oberkiefers und des Unterkiefers wie bei dem einteiligen Mundeinsatz 10 aus der ersten Ausführungsform gemäß Fig.1 stets mit dem gleichen Reinigungsprogramm geputzt. Allerdings können die Reinigungsstrukturen 14 der beiden Mundeinsatzelemente 10A,B voneinander verschieden sein, so dass der Oberkiefer und der Unterkiefer des Benutzers dennoch unterschiedlichen Zahnputzbehandlung unterzogen werden.

In der in Figur 6 dargestellten Variante der zweiten Ausführungsform sind die beiden Vibrationsmotoren 20A, 20B jeweils mit einer eigenen Energieversorgung in Form einer Batterie oder eines Akkus 34A, 34B ausgestattet. Selbstverständlich ist auch eine elektronische Abwandlung dergestalt möglich, dass beide Vibrationsmotoren 20A, 20B durch eine einzige Batterie/Akku versorgt werden.

In einer anderen vereinfachten Variante der zweiten Ausführungsform der Erfindung können die beiden Mundeinsatzelemente 10A,B durch eine einzige Antriebsvorrichtung 18 mit einem einzigen Vibrationsmotor 20 in Vibration versetzt werden. Hierzu ist entweder erforderlich, dass der Vibrationsmotor 20 zwei aus dem Gehäuse der Antriebsvorrichtung 18 vorstehende Schwingschäfte 22A, 22B antreibt, oder dass der Vibrationsmotor 20 wie in der ersten Ausführungsform der Erfindung einen einzigen Schwingschaft 22 antreibt, auf den ein in den Figuren nicht dargestelltes Zwischenkupplungsstück mit einer eingangsseitigen Kupplung und zwei ausgangsseitigen Kupplungen aufsteckbar ist, welche mit dem oberen Kupplungselement 16A und dem unteres Kupplungselement 16B verbind bar sind.

In allen obigen Ausführungsformen sorgen die Bewegungen des Mundeinsatzes 10,10A, 10B zusätzlich zu der direkten Reinigungswirkung durch vibrierenden Kontakt mit den Zahn- und Kauflächen ferner für eine dynamische Flüssigkeitsströmung im Mund des Benutzers. Zahnpasta und Speichel werden sanft zu einer mit Sauerstoff angereicherten, schäumenden Flüssigkeit vermischt. Diese wird im gesamten Mundraum verteilt, auch hinter und zwischen den Zähnen sowie entlang des Zahnfleischrandes, wo sich die Plaque-Biofilm-Bakterien sammeln. In allen Ausführungsformen ist die erfindungsgemäße Zahnputzvorrichtung in der Lage, bis zu viermal mehr Plaque zu entfernen, als eine Handzahnbürste. Gleichzeitig wird ein Eindrücken von Bakterien in Taschen am Zahnfleischrand weitgehend vermieden.

## Patentansprüche

1. Zahnputzvorrichtung für die gleichzeitige Reinigung aller Zähne eines Benutzers, umfassend:
a) einen Mundeinsatz (10) zum Einsetzen in den Mund des Benutzers;
b) eine Mehrzahl von Reinigungsstrukturen (14), die an dem Mundeinsatz (10) angebracht oder einstückig mit dem Mundeinsatz (10) ausgebildet sind;
c) ein an dem Mundeinsatz (10) angebrachtes Kupplungselement (16; 16A, 16B); und
d) eine Antriebsvorrichtung (18) mit:
- einem Vibrationsmotor (20; 20A, 20B), der derart mit dem Kupplungselement (16; 16A, 16B) verbindbar ist, dass er den Mundeinsatz (10; 10A, 10B) im Betrieb der Zahnputzvorrichtung in Vibration versetzt, und
- einem Reinigungsprogramm-Auswahlelement (26) zum Auswählen eines Reinigungsprogramms, das eine Vibrationsfrequenz des Vibrationsmotors (20; 20A, 20B) innerhalb eines vorgegebenen Frequenzbereichs und/oder eine Vibrationsamplitude des Vibrationsmotors (20; 20A, 20B) innerhalb eines vorgegebenen Amplitudenbereichs definiert **dadurch gekennzeichnet, dass**
der Mundeinsatz (10) zweiteilig ausgebildet ist, mit einem oberen Mundeinsatzelement (10A) für die Zähne des Oberkiefers und einem unteren Mundeinsatzelement (10B) für die Zähne des Unterkiefers, wobei an dem oberen und dem unteren Mundeinsatzelement (10A, 10B) jeweils ein Kupplungselement (16A, 16B) zur Verbindung mit einem jeweiligen zugeordneten Vibrationsmotor (20A, 20B) angebracht ist, und dass
das Reinigungsprogramm-Auswahlelement (26) dazu ausgelegt ist, aus einem Speicher einer Steuerschaltung (32) der Antriebsvorrichtung (18) ein erstes vordefiniertes Reinigungsprogramm für das obere Mundeinsatzelement (10A) und ein zweites vordefiniertes Reinigungsprogramm für das untere Mundeinsatzelement (10B) auszuwählen.

2. Zahnputzvorrichtung nach Anspruch 1, **dadurch gekennzeichnet, dass** der vorgegebene Frequenzbereich zwischen ungefähr 1500 und ungefähr 41.000 Schwingungen pro Minute liegt.

3. Zahnputzvorrichtung nach Anspruch 1 oder 2, **dadurch gekennzeichnet, dass** das Reinigungsprogramm-Auswahlelement (26) ein Frequenzeinstellelement und/oder ein Amplitudeneinstellelement umfasst, das/die an einem Gehäuse der Antriebsvorrichtung (18) für den Benutzer zugänglich angeordnet ist/sind.

4. Zahnputzvorrichtung nach einem der Ansprüche 1-3, **dadurch gekennzeichnet, dass** das Reinigungsprogramm-Auswahlelement (26) dazu ausgelegt ist, aus einem Speicher einer Steuerschaltung (32) der Antriebsvorrichtung (18) wenigstens ein vordefiniertes Reinigungsprogramm auszuwählen, das eine zeitliche Veränderung der Vibrationsfrequenz und/oder der Vibrationsamplitude des Vibrationsmotors (20; 20A, 20B) vorsieht.

5. Zahnputzvorrichtung nach Anspruch 4, **dadurch gekennzeichnet, dass** das wenigstens eine vordefinierte Reinigungsprogramm einen zeitlichen Anstieg der Vibrationsfrequenz und/oder der Vibrationsamplitude vorsieht.

6. Zahnputzvorrichtung nach Anspruch 5, **dadurch gekennzeichnet, dass** das wenigstens eine vordefinierte Reinigungsprogramm nach dem zeitlichen Anstieg die Beibehaltung einer maximalen Vibrationsfrequenz und/oder Vibrationsamplitude während eines vorbestimmten Zeitraums vorsieht, gefolgt von einer anschließenden Verringerung der Vibrationsfrequenz und/oder der Vibrationsamplitude, und/oder einem automatischen Abschalten des Vibrationsmotors (20; 20A, 20B).

7. Zahnputzvorrichtung nach einem der vorhergehenden Ansprüche, **dadurch gekennzeichnet, dass** die Reinigungsstrukturen (14) umfassen:
a) Gummierungsschichten, die auf Oberflächenbereichen des Mundeinsatzes (10) angebracht sind; und/oder
b) Reinigungselemente (28, 30), die einstückig mit Oberflächenbereichen des Mundeinsatzes (10) ausgebildet sind; und/oder
c) Streifenbürsten, die auf Oberflächenbereichen des Mundeinsatzes (10) angebracht sind.

8. Zahnputzvorrichtung nach einem der vorhergehenden Ansprüche, **dadurch gekennzeichnet, dass** Reinigungsstrukturen (14) im Bereich von Kauflächen verschieden sind von Reinigungsstrukturen (14) im Bereich von Zahnflächen und/oder dass Reinigungsstrukturen (14) im Bereich von Zahnflächen verschieden sind von Reinigungsstrukturen (14) im Bereich des Zahnfleischrands.

9. Verfahren zur Herstellung einer Zahnputzvorrichtung nach einem der vorhergehenden Ansprüche, umfassend die Schritte:
a) Scannen des Gebisses des Benutzers mit einem Intraoralscanner;
b) Generieren eines 3D-Gebissmodells aus den Scandaten;
c) Erstellen einer Konstruktionsdatei für den Mundeinsatz (10) auf Grundlage des 3D-Gebissmodells; und
d) Herstellung des Mundeinsatzes (10) mittels eines 3D-Druckverfahrens.

10. Verfahren nach Anspruch 9, **dadurch gekennzeichnet, dass** Schritt d) selektives Lasersintern und/oder Gummisintern umfasst.

## Claims

1. Teeth cleaning device for the simultaneous cleaning of all of the teeth of a user, comprising:
a) a mouth insert (10) for insertion into the mouth of the user;
b) a plurality of cleaning structures (14), which are attached to the mouth insert (10) or constructed in one piece with the mouth insert (10);
c) a coupling element (16; 16A, 16B) attached to the mouth insert (10); and
d) a drive device (18), having:
- a vibration motor (20; 20A, 20B), which can be connected to the coupling element (16; 16A, 16B) in such a manner that the vibration motor vibrates the mouth insert (10; 10A, 10B) during the operation of the teeth cleaning device, and
- a cleaning program selection element (26) for selecting a cleaning program, which defines a vibration frequency of the vibration motor (20; 20A, 20B) within a predetermined frequency range and/or a vibration amplitude of the vibration motor (20; 20A, 20B) within a predetermined amplitude range; **characterized in that**
the mouth insert (10) is constructed in two pieces, having an upper mouth insert element (10A) for the teeth of the upper jaw and a lower mouth insert element (10B) for the teeth of the lower jaw, wherein a coupling element (16A, 16B) for connection to a respective assigned vibration motor (20A, 20B) is respectively attached to the upper and the lower mouth insert elements (10A, 10B); and **in that**
the cleaning program selection element (26) is designed to select a first predefined cleaning program for the upper mouth insert element (10A) and to select a second predefined cleaning program for the lower mouth insert element (10B), from a memory of a control circuit (32) of the drive device (18).

2. Teeth cleaning device according to Claim 1, **characterized in that** the predetermined frequency range lies between approximately 1500 and approximately 41,000 oscillations per minute.

3. Teeth cleaning device according to claim 1 or 2, **characterized in that** the cleaning program selection element (26) comprises a frequency adjusting element and/or an amplitude adjusting element which is/are arranged on a housing of the drive device (18) in an accessible manner for the user.

4. Teeth cleaning device according to one of claims 1-3, **characterized in that** the cleaning program selection element (26) is designed to select at least one predefined cleaning program from a memory of a control circuit (32) of the drive device (18), which provides a temporal change of the vibration frequency and/or the vibration amplitude of the vibration motor (20; 20A, 20B).

5. Teeth cleaning device according to claim 4, **characterized in that** at least one predefined cleaning program provides a temporal increase of the vibration frequency and/or the vibration amplitude.

6. Teeth cleaning device according to claim 5, **characterized in that** at least one predefined cleaning program provides, after the temporal increase, retaining a maximum vibration frequency and/or vibration amplitude during a predetermined time period, followed by a subsequent reduction of the vibration frequency and/or the vibration amplitude, and/or automatic switching off of the vibration motor (20; 20A, 20B).

7. Teeth cleaning device according to one of the preceding claims, **characterized in that** the cleaning structures (14) comprise:
a) rubber-coating layers, which are attached to surface regions of the mouth insert (10); and/or
b) cleaning elements (28, 30), which are constructed integrally with surface regions of the mouth insert (10); and/or
c) strip brushes, which are attached to surface regions of the mouth insert (10).

8. Teeth cleaning device according to one of the preceding claims, **characterized in that** cleaning structures (14) in the region of masticating surfaces are different from cleaning structures (14) in the region of tooth surfaces and/or **in that** cleaning structures (14) in the region of tooth surfaces are different from cleaning structures (14) in the region of the gingival margin.

9. Method for producing a teeth cleaning device according to one of the preceding claims, comprising the steps of:
a) scanning the dentition of the user using an intraoral scanner;
b) generating a 3D dentition model from the scan data;
c) creating a construction file for the mouth insert (10) on basis of the 3D dentition model; and
d) producing the mouth insert (10) by means of a 3D printing method.

10. Method according to claim 9, **characterized in that** step d) comprises selective laser sintering and/or rubber sintering.

## Revendications

1. Dispositif de nettoyage des dents, destiné à nettoyer simultanément toutes les dents d'un utilisateur, comprenant :
a) un insert buccal (10), destiné à être inséré dans la bouche de l'utilisateur ;
b) une pluralité de structures nettoyantes (14), qui sont montées sur l'insert buccal (10) ou conçues en monobloc avec l'insert buccal (10) ;
c) un élément de couplage (16 ; 16A, 16B) monté sur l'insert buccal (10) ;
d) un dispositif d'entraînement (18), pourvu :
- d'un moteur vibrant (20 ; 20A, 20B), qui est susceptible d'être connecté sur l'élément de couplage (16 ; 16A, 16B), de sorte amener en vibration l'insert buccal (10 ; 10A, 10B) pendant le fonctionnement du dispositif de nettoyage des dents, et
- un élément sélecteur de programme de nettoyage (26), destiné à sélectionner un programme de nettoyage qui définit une fréquence vibratoire du moteur vibrant (20 ; 20A, 20B) à l'intérieur d'une gamme de fréquences prédéfinie et/ou une amplitude de vibration du moteur vibrant (20 ; 20A, 20B) à l'intérieur d'une gamme d'amplitudes,
**caractérisé en ce que**
l'insert buccal (10) est conçu en deux parties, avec un élément d'insert buccal (10A) supérieur, pour les dents de la mâchoire supérieure et un élément d'insert buccal (10B) inférieur, pour les dents de la mâchoire inférieure, sur l'élément d'insert buccal (10A, 10B) supérieur et inférieur étant monté respectivement un élément de couplage (16A, 16B), destiné à être connecté avec un moteur vibrant (20A, 20B) respectivement associé, et **en ce que** l'élément sélecteur de programme de nettoyage (26) est conçu pour sélectionner, à partir d'une mémoire d'un circuit de commande (32) du dispositif d'entraînement (18) un premier programme de nettoyage prédéfini pour l'élément d'insert buccal (10A) supérieur et un deuxième programme de nettoyage prédéfini pour l'élément d'insert buccal (10B) inférieur.

2. Dispositif de nettoyage des dents selon la revendication 1, **caractérisé en ce que** la gamme de fréquences prédéfinie se situe entre approximativement 1500 et approximativement 41.000 oscillations par minute.

3. Dispositif de nettoyage des dents selon la revendication 1 ou 2, **caractérisé en ce que** l'élément sélecteur de programme de nettoyage (26) comprend un élément de réglage de la fréquence et/ou un élément de réglage de l'amplitude qui est/sont placé(s) en étant accessible(s) à l'utilisateur sur un boîtier du dispositif d'entraînement (18).

4. Dispositif de nettoyage des dents selon l'une quelconque des revendications 1 à 3, **caractérisé en ce que** l'élément sélecteur de programme de nettoyage (26) est conçu pour sélectionner dans une mémoire d'un circuit de commande (32) du dispositif d'entraînement (18) au moins un programme de nettoyage prédéfini, qui prévoit une variation temporelle de la fréquence vibratoire et/ou de l'amplitude de vibration du moteur vibrant (20 ; 20A, 20B).

5. Dispositif de nettoyage des dents selon la revendication 4, **caractérisé en ce que** l'au moins un programme de nettoyage prédéfini prévoit un accroissement temporel de la fréquence vibratoire et/ou de l'amplitude de vibration.

6. Dispositif de nettoyage des dents selon la revendication 5, **caractérisé en ce qu'**après l'accroissement temporel, l'au moins un programme de nettoyage prédéfini prévoit le maintien d'une fréquence vibratoire et/ou d'une amplitude de vibration maximale pendant une période prédéterminée, suivie d'une diminution consécutive de la fréquence vibratoire et/ou de l'amplitude de vibration, et/ou d'une mise à l'arrêt automatique du moteur vibrant (20 ; 20A, 20B).

7. Dispositif de nettoyage des dents selon l'une quelconque des revendications précédentes, **caractérisé en ce que** les structures nettoyantes (14) comprennent :
a) des Couches de caoutchoutage, qui sont appliquées sur des zones superficielles de l'insert buccal (10) ; et/ou
b) éléments de nettoyage (28, 30), qui sont conçus en monobloc avec des zones superficielles de l'insert buccal (10) ; et/ou
c) des brosses strips, qui sont montées sur des zones superficielles de l'insert buccal (10).

8. Dispositif de nettoyage des dents selon l'une quelconque des revendications précédentes, **caractérisé en ce que** des structures nettoyantes (14) dans la zone de surfaces de mastication sont différentes de structures nettoyantes (14) dans la zone de surfaces dentaires et/ou **en ce que** des structures nettoyantes (14) dans la zone de surfaces dentaires sont différentes de structures nettoyantes (14) dans la zone du sillon gingival.

9. Procédé, destiné à fabriquer un dispositif de nettoyage des dents selon l'une quelconque des revendications précédentes, comprenant les étapes consistant à :
a) numériser la denture de l'utilisateur à l'aide d'un scanner intraoral ;
b) générer un modèle de denture en 3D à partir des données de numérisation ;
c) créer un fichier de construction pour l'insert buccal (10) sur la base du modèle de denture en 3D ; et
d) fabriquer l'insert buccal (10) au moyen d'un procédé d'impression en 3D.

10. Procédé selon la revendication 9, **caractérisé en ce que** l'étape d) comprend un frittage sélectif au laser et/ou un frittage de caoutchouc.
